Europäisches Patentamt

European Patent Office

Office européen des brevets

(11) Veröffentlichungsnummer: **0 216 136 B1**

# EUROPÄISCHE PATENTSCHRIFT

(45) Veröffentlichungstag der Patentschrift: 25.09.91

(21) Anmeldenummer: 86111445.2

(22) Anmeldetag: 19.08.86

(51) Int. Cl.⁵: **G01J 5/34**, H01L 37/02, G08B 13/18

(54) Sensorelementeanordnung in einem Halterahmen für einen Pyrodetektor und Verfahren zu deren Herstellung.

(30) Priorität: 11.09.85 DE 3532454
04.06.86 DE 3618732

(43) Veröffentlichungstag der Anmeldung:
01.04.87 Patentblatt 87/14

(45) Bekanntmachung des Hinweises auf die Patenterteilung:
25.09.91 Patentblatt 91/39

(84) Benannte Vertragsstaaten:
AT BE CH DE FR GB IT LI NL SE

(56) Entgegenhaltungen:
EP-A- 0 023 354
DE-A- 3 216 664

ELECTRONICS, Band 55, Nr. 12, 16. Juni 1982, Seiten 84-85; J. GOSCH: "Thin film cuts time of detector response"

(73) Patentinhaber: **Siemens Aktiengesellschaft**
**Wittelsbacherplatz 2**
**W-8000 München 2(DE)**

(72) Erfinder: **Meixner, Hans, Dr. Dipl.-Ing.**
**Max-Planck-Strasse 5**
**W-8013 Haar(DE)**
Erfinder: **Freitag, Reinhard, Dipl.-Ing. (FH)**
**Milbertshofener Strasse 131**
**W-8000 München 40(DE)**
Erfinder: **Pettke, Felix, Dipl.-Ing.**
**Theodor-Heuss-Strasse 6a**
**W-4836 Herzebrock(DE)**
Erfinder: **Siwon, Hans**
**Erlenweg 1**
**W-8201 Obing(DE)**
Erfinder: **Armonier, Ulrich**
**Havelstrasse 3a**
**W-4840 Rheda(DE)**

**Beschreibung**

Die Erfindung betrifft einen Pyrodetektor zur Detektion eines in seinen Detektionsbereich eintretenden, eine von seiner Umgebungstemperatur abweichende Temperatur aufweisenden Körpers, mit einer Sensorelementeanordnung in einem Halterahmen, und einem Hohlspiegel zur Fokussierung der von diesem Körper ausgehenden Wärmestrahlung, wobei ein erstes Senorelement im Fokus des Hohlspiegels angebracht ist und zwei weitere Sensorelemente zur Kompensation von Umgebungseinflüssen vorgesehen sind, wobei

- eine Folie aus ein und demselben elektrisch nicht leitenden Material mit permanenter gleichgerichteter Orientierungspolarisation vorgesehen ist, auf deren beide Seiten Elektroden aus dünnen Metallschichten einander so gegenüberstehen, daß die Sensorelemente gebildet werden,
- die Elektroden über elektrischen Leitungen mit einer elektronischen Auswerteeinrichtung verbunden sind,
- die Sensorelementeanordnung in einer im Hohlspiegel vorhandenen Halterung befestigt ist und die Folie mit den Sensorelementen in dem Hohlspiegel so angeordnet ist, daß ein Strahlungseinfall der im Hohlspiegel reflektierten Strahlung auf beiden Oberflächenseiten der Folie vorliegt,
- der Hohlspiegel ein parabolischer Spiegel ist, der so bemessen ist, daß sein Fokus in der inneren Hälfte des Hohlspiegels liegt,
- die Folie mit den Sensorelementen in der optischen Achse des Hohlspiegels liegt, so daß das erste Sensorelement im wesentlichen nur von einer solchen Strahlung des in in größerer Entfernung befindlichen zu detektierenden Körpers getroffen wird, die im Hohlspiegel reflektiert worden ist.

Die Erfindung betrifft ferner ein Verfahren zum Herstellen einer Sersorelementeanordnung in einem Halterahmen, bei dem zunächst auf einer Kunststoffolie, insbesondere aus Polyvinylidendifluorid (PVDF), durch entsprechende Metallisierung die Sensorelemente erzeugt, diese Anordnung mit Stromzuführungen versehen und danach in einem Halterahmen untergebracht wird.

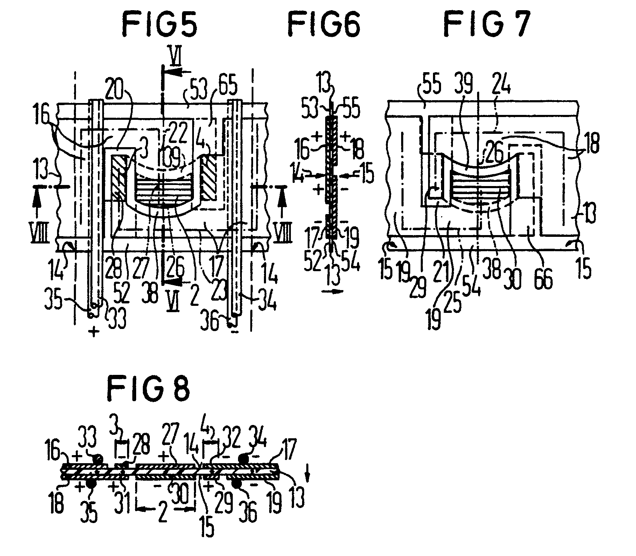

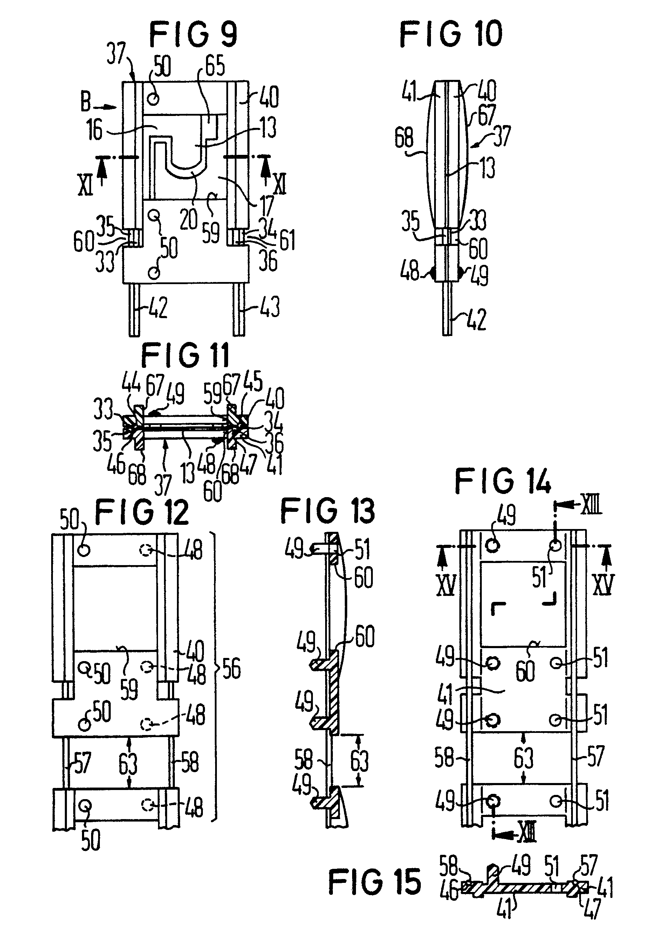

Ein Pyrodetektor mit den angegebenen Merkmalen ist hinsichtlich seiner konstruktiven Gestaltung und insbesondere seiner Wirkungsweise in der EP-B1 0 023 354 eingehend beschrieben. Die genannte europäische Patentschrift entspricht der DE-PS 29 30 632 zusammen mit der DE-OS 30 28 252 sowie der US-PS 4 404 468. In der genannten europäischen Patentschrift sind in den Figuren 6 und 8 und den zugehörigen Beschreibungsteilen, sowie in den Ansprüchen 2 und 5 Ausführungen für Sensorelementeanordnungen mit jeweils zwei Sensorelementen gezeigt, bei denen die permanenten Orientierungspolarisationen der Kunststoffolie für die einzelnen Sensorelemente entgegengesetzt (s. FIG 6) bzw. gleichgerichtet sind, wobei jedoch die Ausführungsform (gemäß FIG 6) für beide Elemente eine gemeinsame Gegenelektrode vorschlägt.

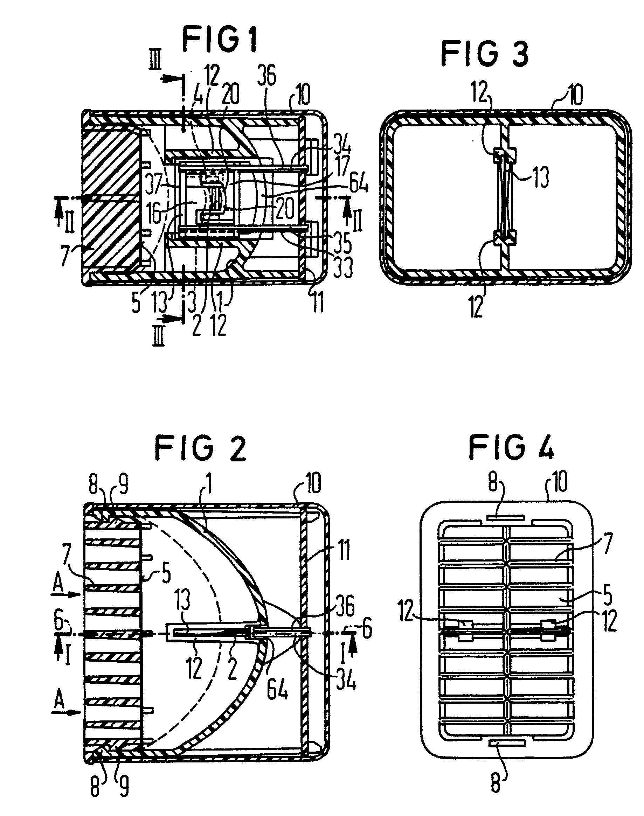

In FIG 3 der genannten europäischen Patentschrift sind drei Sensorelemente gezeigt und in der Beschreibung erläutert, jedoch haben diese drei Sensorelemente auf jeder Seite der Kunststoffolie jeweils nur gemeinsame Elektroden und damit jeweils Elektroden gleicher Polarität.

Die Wirkung des Detektors ist um so besser, je besser nicht zu detektierende Wärmestrahlung durch weitere Sensorelemente vom eigentlichen Detektionsvorgang eleminiert werden. Dieser Vorgang wird noch verstärkt, wenn diese weiteren Sensorelemente eine gegenüber dem im Fokus befindlichen Sensorelement entgegengesetzte Polarisationsrichtung haben. Um dies zu verwirklichen, kann der genannten europäischen Patentschrift entnommen werden, entweder in die Kunststoffolie für die Sensorelemente eine an den betreffenden Stellen entgegengesetzte Polarisation einzuprägen und die jeweiligen Elektroden je für sich mit der Auswerteschaltung zu verbinden oder eine Sensorfolie einzusetzen, die über ihre gesamte Fläche gleichgerichtete Orientierungspolarisation aufweist und auch in diesem Falle die Elektroden jeweils einzeln mit der Auswerteschaltung zu verbinden.

Obwohl diese Ausführungsformen grundsätzlich möglich sind und in Labormustern auch realisiert wurden, stellt man doch fest, daß der fertigungstechnische Aufwand zur Herstellung solcher Pyrodetektoren sehr hoch ist, so daß erhebliche Kosten entstehen, die einen vernünftigen Verkaufspreis nicht ergeben, insbesondere weil eine Massenproduktion kaum realisierbar ist.

Ansätze, den erwähnten Aufwand zu verringern, sind beispielsweise der DE-A-3 216 664 zu entnehmen. Der dort gezeigte Pyrodetektor offenbart eine Sensorkonfiguration, die analog der Ausführung gemäß FIG 6 der EP-0 023 354 B1 gleichfalls nicht aus einem Material mit gleichgerichteter Polarisation besteht, sondern aus Bereichen mit verschiedenen Orientierungspolarisationen. Diese Sensorkonfiguration enthält zudem Elektroden beider Polaritäten auf jeder Folienseite, die jeweils durch einen quasimäanderförmig verlaufenden Isolierstreifen voneinander getrennt sind, wobei die Elektroden so einander gegenüberstehen, daß mehrere Sensorelemente gebildet werden.

Der vorliegenden Erfindung liegt die Aufgabe zugrunde, einen Pyrodetektor mit einer Sensorelementanordnung der eingangs angegebenen Art anzugeben, die bei geringem Fertigungsaufwand vornehmlich eine Massenproduktion mit sehr hohen Stückzahl ermöglicht und einen Pyrodetektor mit noch exakterer Detektion ergibt. Es gehört mit zur Aufgabe der Erfindung, ein Verfahren zum Herstellen einer solchen Sensorelementeanordnung mit Halterahmen anzugeben.

Zur Lösung dieser Aufgabe ist die Sensorelementeanordnung in einem Halterahmen der eingangs angegebenen Art erfindungsgemäß gekennzeichnet durch die Merkmale:

- auf jeder Seite der Folie sind Elektroden beider Polaritäten vorhanden,
- die Elektroden sind auf jeder Seite durch einen quasi-mäanderförmig verlaufenden metallfreien Isolierstreifen voneinander getrennt,
- die Konfiguration der Elektroden ist derart ausgebildet, daß sie in Form von Haken ineinandergreifen,
- zur Bildung der drei Sensorelemente stehen die Elektroden auf der einen Seite den Elektroden der anderen Seite der Folie so gegenüber, daß die in der Mitte der Folie vorhandenen Endflächen der Haken der Elektroden die gegenpoligen Belegungen des für die Lage im Fokus bestimmten Sensorelementes bilden, während die von der Mitte der Folie abweichenden Endflächen der Haken der Elektroden zusammen mit jeweils gegenüberliegenden Elektrodenflächen die gegenpoligen Belegungen der beiden zur Kompansation dienenden Sensorelemente bilden, die zur Differenzbildung zum im Fokus angeordneten Sensorelement gegengeschaltet sind,
- an den Randbereichen der Folie sind die jeweils gegenüberliegenden gleichpoligen Elektroden der beiden Seiten miteinander durch Leitungen außerhalb der Folie verbunden,
- die Sensorelementeanordnung samt Folie und Leitungen ist von dem Halterahmen umgeben, der zentriert und justiert in die Halterung einsetzbar ist.

Die Elektroden bestehen vorzugsweise aus Aluminium, Zink, Zinn, Kupfer, Silber oder Gold oder einem der Platinmetalle und sind im Aufdampfverfahren hergestellt.

Bestehen die Elektroden aus Kupfer- oder Silberschichten, dann ist es zur Verbesserung der Absorption bzw. zur Verminderung der Reflektion der zu detektierenden Strahlung (IR-Strahlung) vorteilhaft, wenn die Oberflächen dieser Schichten in das jeweilige Sulfid (CuS bzw. $Ag_2S$) umgewandelt sind. Elektroden aus Schichten der anderen Metalle, aber auch aus Kupfer oder Silber, können zu diesem Zweck mit einer Kunststoffschicht versehen sein, die beispielsweise aus Polyimid, Polyethylen, Polyethylenterephthalat oder Zapponlack besteht und gleichzeitig auch gegen Einflüsse aus der Umgebung schützt.

Vorzugsweise ist die Fläche des für die Lage im Fokus des Hohlspiegels vorgesehenen mittleren Sensorelementes der Fokusfläche selbst angepaßt. Ferner ist es vorteilhaft, daß für einen in zwei Ebenen gewölbten Hohlspiegel, dessen Krümmung in einer Ebene stärker sein kann als in der anderen Ebene, die Fläche des mittleren Sensorelementes zu den Randbereichen hin durch gerade verlaufende Teile und quer dazu durch im gleichen Sinn gekrümmt verlaufende Teile der quasi-mäanderförmig verlaufenden metallfreien Streifen begrenzt sind.

Diese Ausführungsformen sind vorteilhaft, weil der Pyrodetektor, ausgenommen von der Detektionsrichtung, ein nach außen abgeschlossenes Gebilde sein muß, das gewissermaßen einen gegen Störeinflüsse abgeschirmten Raum darstellt.

Wählt man deshalb einen nur in einer Ebene gekrümmten Hohlspiegel, d.h. einen Hohlspiegel, dessen Querschnitt über seine gesamte Breite stets der gleichen Parabel folgt, so ist die Fokusfläche ein die eigentliche Brennlinie erweiternder Bereich längs der Mittelachse und parallel zur Spiegelfläche. Die weiteren Sensorelemente müßten dann in Einfallsrichtung der Wärmestrahlung vor oder nach dieser Fokusfläche angeordnet werden, und die Seitenteile müssen senkrecht zur Spiegelebene verschlossen werden.

Eine wesentlich günstigere Ausführungsform dient für einen Hohlspiegel, der in zwei Ebenen gewölbt ist, die senkrecht aufeinanderstehen, und für den es sich empfiehlt, eine Achse länger als die andere zu wählen, wobei die Krümmung in einer Ebene vorzugsweise stärker ist als in der anderen Ebene. Bei einem solchen Hohlspiegel ist die Fokusfläche gewissermaßen sichel- oder mondförmig und reicht nicht bis zu den seitlichen Gehäuseteilen. Diese Ausführungsform sieht vor, daß die Fläche des für die Lage im Fokus des Hohlspiegels vorgesehenen mittleren Sensorelements der Fokusfläche angepaßt ist. Hierdurch ist es möglich, die weiteren Sensorelemente in Einfallsrichtung der Wärmestrahlung zu beiden Seiten der Fokusfläche anzuordnen, wodurch sich weitere fertigungstechnische Vorteile und eine exaktere Detektion des Pyrodetektors ergeben.

Dadurch, daß auf jeder Seite der Sensorfolie Elektroden beider Polarität vorhanden sind, die in erfindungsgemäßer Weise ineinandergreifen, ergibt sich die Möglichkeit, die Elektroden gleicher Polarität der gegenüberliegenden Seiten miteinander außerhalb der Folie zu verbinden und die gesamte Sensorelementeanordnung samt Folie und Leitungen in einen Halterahmen einzubauen, der zentriert und justiert in der Halterung innerhalb des Hohlspiegels eingesetzt ist.

Besonders vorteilhaft ist eine Sensorelementanordnung in einem Halterahmen, der die Folie der Sensorelemente trägt und mit elektrischen Leitungen als Stromzuführungen zu den Sensorlementen und Steckerstiften für die Verbindung mit der elektronischen Auswerteschaltung versehen ist, wenn erfindungsgemäß der Halterahmen aus einem oberen Teil und einem unteren Teil je aus gepreßtem Isolierstoff besteht, die miteinander verbunden sind und zwischen denen sowohl die Folie als auch die Leitungen befestigt sind, die in die Steckerstifte übergehen.

Die beiden Teile des Halterahmens enthalten die Leitungen in Rinnen, wobei jeweils die Rinnen des oberen Teiles gegenüber den Rinnen des unteren Teiles gegeneinander um um einen geringen Betrag versetzt sind und dadurch den Halt der Folie und klemmende Kontakte zwischen den Leitungen und den Metallschichten der Elektroden bewirken.

Ferner ist es vorteilhaft, wenn der obere Teil und der untere Teil des Halterahmens an jeweils gleichen Stellen mit Zapfen und entsprechend dazu jeweils an gleichen Stellen mit Löchern für die Verbindung der beiden Teile nach dem Druckknopfprinzip versehen sind.

Alle diese Merkmale ermöglichen, daß der obere Halterahmen und der untere Halterahmen in Draufsicht und im Querschnitt miteinander identisch sind. Beim Zusammenbau des Rahmens können dann die beiden Teile des Halte-rahmens ohne weiteres miteinander verbunden werden.

Das Verfahren zum Herstellen einer Sensorelementeanordnung mit Halterahmen der oben beschriebenen Art ist erfindungsgemäß gekennzeichnet durch die Verfahrensschritte:

a) Herstellen eines beiderseitig metallisierten Bandes, indem eine Folie aus Plyvinylidendifluorid beiderseitig mit Metall versehen, insbesondere bedampft wird, wobei in Längsrichtung des Bandes an beiden Seiten metallfreie Randstreifen freigelassen werden und dabei oder danach quasi-mäanderförmig verlaufende metallfreie Streifen auf der oberen Seite und quasi-mäanderförmig verlaufende Streifen auf der unteren Seite des Bandes sich stets wiederholend so hergestellt werden, daß die angestrebte Konfiguration der Elektroden für die Sensorelemente entsteht,

b) Herstellen der Halterahmen, indem zunächst synchron oder in anderem Zeitablauf zum Verfahrensschritt a) wenigstens ein leiterartiges Gebilde aus zwei von Vorratsrollen ablaufenden Drähten und an diesen Drähten oder getrennt erzeugten, die Rinnen, die Zapfen und die Löcher aufweisenden Halterahmenteile dadurch gebildet wird, daß die Drähte als spätere Leitungen in den Rinnen befestigt werden, wobei zwischen den in Draufsicht und im Querschnitt identischen Halterahmenteilen jeweils ein der Länge der später benötigten Steckerstifte entsprechender Abstand eingehalten wird,

c) Abtrennen der Halterahmenteile von dem oder den leiterartigen Gebilden vor oder nach dem Zwischenfügen eines entsprechenden, die Folie mit den Elektroden und den Sensorelementen darstellenden Teiles des Bandes des Verfahrensschrittes a) quer zur Laufrichtung des leiterartigen Gebildes und betätigen der Druckknopfverbindung.

Vorzugsweise wird das Band gemäß Verfahrensschritt a) im Siebdruckverfahren metallisiert, wobei die quasimäanderförmigen Streifen durch entsprechende Abdeckschablonen erzeugt werden.

Besonders vorteilhaft ist es, das Band gemäß Verfahrensschritt a) durch Bedampfung oder durch Kathodenzerstäubung mit einem der Metalle Aluminium, Zink, Zinn, Kupfer, Silber oder Gold oder einem der Platinmetalle zu metallisieren und die quasi-mäanderförmigen Streifen durch Elektroerosion (beispielsweise mit einem als Elektrode wirkenden abrollenden Rad), durch chemisches Ätzen, Laserenergie oder auf mechanische Weise durch Abschleifen zu erzeugen.

Um bei Elektroden aus Kupfer- oder Silberschichten deren Oberfläche in das jeweilige Sulfid ($CuS$, $Ag_2S$) umzuwandeln, ist es vorteilhaft, wenn nach dem Verfahrensschritt a) ein weiterer Verfahrensschritt eingefügt wird, bei dem die mit den Elektroden aus Kupfer oder Silber versehene Folie durch ein Gefäß geführt wird, in welchem sich Schwefelwasserstoff ($H_2S$) als Gas oder als Schwefelwasserstoffwasser befindet. Allein durch diese Behandlung entsteht eine ausreichende chemische Umsetzung an der Oberfläche der Schichten.

Die durch die vorliegende Erfindung vorgeschlagene besondere Art der Anordnung der Elektroden für die einzelnen Sensorelemente auf der Kunststoffolie ergibt zusammen mit dem Halterahmen, der die Verbindung von Elektroden gleicher Polarität auf der oberen und der unteren Seite der Sensorfolie gemäß der Erfindung ermöglicht, eine Sensorelementeanordnung mit Halterahmen für einen Pyrodetektor, die in besonders wirtschaftlicher Weise hergestellt werden kann und deshalb für die Massenproduktion geeignet ist.

Die Erfindung wird nachfolgend anhand der beigefügten Figuren erläutert.

Es zeigen:

Fig. 1    einen Pyrodetektor mit eingebauter Sensorelementeanordung gemäß Schnitt I - I in Fig. 2;

Fig. 2    den Pyrodetektor nach Fig. 1 gemäß Schnitt II - II in Fig. 1;

Fig. 3    einen Schnitt gemäß der Linie III - III in Fig. 1;

Fig. 4    eine Draufsicht auf den Pyrodetektor aus Richtung der Pfeile A in Fig. 2;

Fig. 5     eine Draufsicht auf eine Sensorelementeanordnung in Draufsicht ohne
Halterahmen;

Fig. 6     einen Schnitt der Sensorelementeanordnung gemäß Linie VI- VI in Fig. 5;

Fig. 7     eine Draufsicht auf die Unterseite der
Sensorelementeanordnung nach Fig.
5;

Fig. 8     einen Schnitt durch die Anordnung
längs der Linie VIII -VIII in Fig. 5;

Fig. 9     die komplette Sensorelementeanordnung mit eingelegter Sensorelementefolie, Halterahmen und Leitungen in
Draufsicht;

Fig. 10    die Sensorelementeanordnung gemäß Fig. 9 in Seitenansicht gemäß
Pfeil B in Fig. 9;

Fig. 11    einen Schnitt längs der Linie XI - XI
in Fig. 9;

Fig. 12    einen Teil eines aus Rahmen und
Leitungen bestehenden leiterartigen
Gebildes;

Fig. 13    einen Schnitt längs der Linen XIII -
XIII in Fig. 14;

Fig. 14    ebenfalls einen Teil des leiterartigen
Gebildes entsprechend Fig. 12 mit
Sicht von der Rückseite;

Fig. 15    einen Schnitt längs der Linie XV -XV
in Fig. 14.

In den Figuren sind einander entsprechende
Teile mit gleichen Bezugszeichen bezeichnet.

Fig. 1 zeigt den Pyrodetektor als Schnitt längs
der Linie I - I in Fig. 2. In dem auch der Abschirmung dienenden Gehäuse 10 ist der parabolische
Hohlspiegel 1 untergebracht, der in der Zeichnung
nach links hin geöffnet ist. Die Öffnung ist mit
einem Wabengitter 7 und einer darüber gespannten Abdeckfolie 5 verschlossen. Funktion und Ausgestaltung des Wabengitters sind in der eingangs
genannten europäischen Patentschrift eingehend
erläutert. Gleiches gilt für die Abdeckfolie 5, für
die zusätzlich eine weitere Ausgestaltung in der
deutschen deutschen Patentanmeldung P 35 32
475.9 vom 11.09.1985 (VPA 85 P 8057) beschrieben ist.

Die kompakte Konstruktion und Bauweise des
gesamten Pyrodetektors ist in der deutschen Patentanmeldung P 35 32 476.7 vom 11.09.1985
(VPA 85 P 8056) beschrieben.

Aus den Fig. 1 und 2 geht hervor, daß im
zentralen Teil des Hohlspiegels 1 eine aus zwei
Teilen bestehende Halterung 12 angeordnet ist.
Ferner weist der Hohlspiegel 1 in seinem Zentrum
gegenüber der nach links gerichteten Öffnung eine
weitere Öffnung 64 auf, von der die beiden Teile
der Halterung 12 ausgehen. Diese Teile der Halterung 12 sind, wie aus Fig. 3 ersichtlich ist, im Querschnitt U-förmig.

In diese Halterung ist die Sensorelementeanordnung zusammen mit dem sie tragenden Halterahmen 37 eingesetzt. Man erkennt in Fig. 1 die
Folie 13 mit den darauf befindlichen Sensorelementen 2,3 und 4 wobei das Sensorelement 2 im
Fokus des Hohlspiegels 1 angeordnet ist. Die Sensorelemente 3 und 4 sind quer zur Richtung der
einfallenden Wärmestrahlung zu beiden Seiten des
Sensorelementes 2 angeordnet. Man erkennt in
Fig. 1 ferner die Leitungen 33, 34, 35 und 36, die -
was später noch im einzelnen beschrieben wird -
die einzelnen Elektroden der Ober- und Unterseite
der Folie 13 miteinander verbinden und als Stek-
kerstifte zur Verbindung mit der elektronischen
Auswerteeinrichtung 11 dienen. Die Dicke der Folie
13 hängt von dem erwünschten Ansprechzeitraum
(Eintritt der Körper in den Detektionsbereich bis
Abgabe des Signals) und beträgt vorzugsweise 10
$\mu$m.

Diese elektronische Auswerteeinrichtung 11 ist
einerseits in der bereits erwähnten europäischen
Patentanmeldung beschrieben und andererseits ist
sie in der die gesamte konstruktive Gestaltung des
Pyrodetektors betreffenden deutschen Patentanmeldung P 35 32 476.7 (VPA 85 P 8056) beschrieben. Die elektronische Auswerteeinrichtung 11 besteht aus einer Platine mit gedruckten Leiterbahnen
und darauf angebrachten aktiven und passiven
Bauelementen. Sie dient dazu, ein der jeweiligen
Detektionssituation entsprechendes Signal zu erzeugen, das zur Betätigung z.B. eines Schaltvorganges ausgenutzt werden kann.

Aus Fig. 2 geht hervor, daß das Wabengitter 7
durch am Hohlspiegel 1 befindliche Widerhaken 8
und am Wabengitter 7 befindliche Widerhaken 9 im
Hohlspiegel befestigt ist. Die Linie I - I in Fig. 2
stellt gleichzeitig die optische Achse 6 des Hohlspiegels dar. Das Sensorelement 2 befindet sich
sowohl in der optischen Achse 6 des Hohlspiegels
1 als auch in seinem Fokus, der wiederum durch
die konstruktive Gestaltung des Hohlspiegels in
seiner inneren Hälfte entsteht.

Fig. 4 zeigt eine Draufsicht auf den Pyrodetektor gemäß den Pfeilen A in Fig. 2 wobei wiederum
das Wabengitter 7, die Abdeckung 5, die beiden
Teile der Halterung 12 und die Widerhaken 8 zu
erkennen sind.

Die Fig. 5 zeigt das Sensorelement ohne Halterahmen und zwar mit Sicht auf die obere Seite
14, Fig. 6 zeigt einen Schnitt längs der Linie VI - VI
in Fig. 5 und Fig. 7 zeigt die Sensorelementeanordnung mit Sicht auf die untere Seite 15. Fig. 8 stellt
einen Schnitt längs der Linie VIII - VIII in Fig. 5 dar.

Die Figuren 5, 6, 7 und 8 werden nachfolgend
gemeinsam erläutert.

Auf der oberen Seite 14 der Folie 13 sind
Metallschichten als Elektroden 16 und 17 aufgetragen, die voneinander durch einen quasi-mäanderförmig verlaufenden metallfreien Isolierstreifen 20 getrennt sind. Durch diesen Trennstreifen greifen die Elektroden 16 und 17 in Form von Haken 22 und 23 ineinander. Eine entsprechende Anordnung von Metallschichten als Elektroden 18 und 19 ist auf der unteren Seite 15 der Folie 13 enthalten, die durch den quasi-mäanderförmig verlaufenden metallfreien Isolierstreifen 21 voneinander getrennt sind. Die Elektroden 18 und 19 greifen in Form von Haken 24 und 25 ineinander. Der hakenförmige Verlauf der Elektroden ist durch Strich-Punkt-Strich-Linien angedeutet.

Die Enden 27 und 30 der Haken 22 und 25 stehen von beiden Seiten der Folie 13 einander gegenüber und bilden auf diese Weise die gegenpoligen Belegungen des Sensorelementes 2, das durch eine quer verlaufende Strichelung dargestellt ist.

Die Enden 28 und 29 der Haken 23 und 24 bilden zusammen mit ihnen gegenüberliegenden Elektrodenflächen 31 und 32 die Sensorelemente 3 und 4, die in Fig. 2 schrägliniert dargestellt sind und sich zu beiden Seiten des Sensorelementes 2 befinden. Die Größe der gegenüberliegenden Belegungsflächen der Sensorelemente 3 und 4 kann dadurch vergrößert werden, daß der jeweilige Mäanderast verlängert wird und/oder die von Metall freien Flächen 65, 66 am Ende des jeweils anderen Mäanderastes verkleinert werden.

Die Linie VI - VI stellt gleichzeitig auch die Mitte 26 der Folie 13 dar.

Auf der oberen Seite 14 und auf der unteren Seite 15 der Folie 13 sind ferner metallfreie Randstreifen 52, 53, 54, 55 vorhanden, damit in diesem Bereich eine ausreichend große Isolationsstrecke zwischen den Elektroden der oberen Seite 14 und der unteren Seite 15 vorhanden ist.

An den Randbereichen der Folie 13 sind die jeweils gegegenüberliegenden gleichpoligen Elektroden 16 und 18 (Plus) und 17 und 19 (Minus) der beiden Seiten 14 und 15 miteinander durch Leitungen 33 und 35 bzw. 34 und 36 dadurch miteinander verbunden, daß diese Leitungen außerhalb der Folie 13 miteinander in Kontakt stehen.

In den Fig. 6 und 8 sind die Polaritäten durch entsprechende Zeichen (Plus und Minus) gekennzeichnet. Man erkennt in Fig. 6, daß dort nur in einem Bereich sich Plus und Minus gegenüberstehen, wodurch das mittlere Sensorelement 2 gebildet ist, während Fig. 8 zeigt, daß durch die Elektrodenkonfiguration die drei Sensorelemente vorhanden sind.

Die Pfeile in der Folie 13 in Fig. 8 deuten die Permanente gleichgerichtete Orientierungspolarisation der Folie an. Im Bereich des Sensorelementes 2 befindet sich oben die positive Belegung und unten die negative Belegung, während zu beiden Seiten des Sensorelementes 2 im Bereich der Sensorelemente 3 und 4 die positiven und negativen Belegungen einander in umgekehrter Richtung gegenüberstehen.

Man erkennt hieraus eindeutig, daß trotz mehrerer Sensorelemente und gleichgerichteter Orientierungspolarisation in der Folie 13 durch die entgegengesetzte Polung der angestrebte Effekt, nämlich eine Differenzbildung der einzelnen Signale zur Vermeidung nicht zu detektierender Wärmestrahlung, auf einfache Weise erreicht wird.

Nicht zuletzt geht aus den Figuren 5 und 7 hervor, daß die Fläche des für die Lage im Fokus des Hohlspiegels 1 vorgesehenen mittleren Sensorelementes 2 der Fokusfläche angepaßt ist. Für die hier als bevorzugtes Ausführungsbeispiel in den Fig. 1 bis 4 gezeigte konstruktive Gestaltung des Pyrodetektors ist das mittlere Sensorelement 2 zu den Randbereichen hin, nämlich dort wo die Leitungen 33 und 35 bzw,. 34 und 36 sich befinden, durch gerade verlaufende Teile und quer dazu durch im gleichen Sinne gekrümmt verlaufende Teile 38 und 39 der metallfreien Streifens 20 und 21 begrenzt sind.

Bei den Figuren 5 bis 8, insbesondere 6 und 8, ist darauf verzichtet, gegebenenfalls an der Oberfläche der Elektroden 16, 17, 18 und 19 befindliche Sulfidschichten auf den Kupfer-oder Silberschichten darzustellen, um die Übersichtlichkeit nicht zu stören. Aus dem gleichen Grund sind auch gegebenenfalls vorhandene Kunststoffschichten nicht dargestellt.

Bei der in den Fig. 1 bis 4 gezeigten Ausführungsform des Pyrodetektors hat der Hohlspiegel 1 eine rotationssymmetrische Reflektionsfläche. Er kann aber auch in zwei Ebenen gekrümmt, nämlich zu der durch die Linie I -I (= Fig. 1) gegebenen Ebene und der durch die Linie II - II (= Fig. 2) gegebenen Ebene, wobei die einer Parabel entsprechende Krümmung zu der durch die Linie I - I gegebenen Ebene vorzugsweise stärker ist als die Krümmung zu der durch die Linie II - II gegebenen Ebene, wobei letztere Krümmung einer Parabel nicht zu entsprechen braucht.

Die besondere Konfiguration der Elektroden auf den beiden Seiten 14 und 15 der Folie 13 ist praktisch nur wirksam, wenn ein dafür speziell ausgebildeter Halterahmen vorhanden ist, der mit zur Erfindung gehört und nachfolgend anhand der Figuren 9 bis 15 erläutert wird.

Fig. 9 zeigt den kompletten Halterahmen 37 in Draufsicht auf seinen oberen Teil 40.

Fig. 10 zeigt, daß der Halterahmen 37 aus einem oberen Teil 40 und einem unteren Teil 41 besteht, wobei beide Teile 40 und 41 des Halterahmens 37 insbesondere aus Isolierstoff gepreßt sind. Die beiden Teile 40 und 41 sind miteinander verbunden, und zwischen ihnen sind sowohl die Folie 13 als auch die Leitungen 33, 34, 35, 36 befestigt, die außerhalb des Rahmens in Steckerstifte 42 und 43 übergehen.

Im Fenster 59 (Fig. 9) des Halterahmens 37 ist die Kunststoffolie 13 mit den Elektroden 16 und 17 und dem quasi-mäanderförmig verlaufenden metallfreien Streifen 20 zu sehen.

Fig. 11 zeigt, daß der obere Teil 40 mit Rinnen 44 und 45 und der untere Teil 41 mit Rinnen 46 und 47 im Randbereich des Halterahmens 37 versehen sind. In diesen Rinnen sind die Leitungen 33 und 34 bzw. 35 und 36 derart eingelegt, daß sie nicht vollständig in den Rinnen liegen, sondern etwas darüber hinaus stehen (vgl. auch Fig. 15). Die Rinnen 44 und 45 des oberen Teiles 40 sind gegenüber den Rinnen 46 und 47 des unteren Teiles 41 seitlich um einen geringen Betrag versetzt. Hierdurch wird im zusammengebauten Zustand des Rahmens 37 die Folie 13 aus ihrer Ebene um einen geringen Betrag verändert, so daß ein inniger Druckkontakt zwischen den Leitungen 33 und 34 von oben her und 35 und 36 von unten her und den Metallbelegungen 16 und 18 auf der linken Seite bzw. 17 und 19 auf der rechten Seite erzeugt wird.

Es ist selbstverständlich auch möglich und liegt im Rahmen der Erfindung, als Leitungen 33, 34, 35 und 36 auch gedruckte Leiterbahnen zu verwenden, die beispielsweise mit den jeweiligen Elektroden verlötet werden. Auch die Kontaktierung zwischen den Elektroden der Folie 13 und den drahtförmigen Leitungen 33 bis 36 kann durch Lötung erfolgen, sofern die pyroelektrischen Eigenschaften der Folie 13 nicht beeinträchtigt werden.

Für den Zusammenbau weisen der obere Teil 40 und der untere Teil 41 des Halterahmens 37 an jeweils gleichen Stellen Zapfen 48 bzw. 49 auf und entsprechend dazu sind jeweils an gleichen Stellen Löcher 50 bzw. 51 für die Verbindung der beiden Teile 40 und 41 nach dem Druckknopfprinzip vorhanden. Die Zapfen 48 und 49 und die Löcher 50 und 51 werden bei der Herstellung der Rahmenteile 40 und 41 gleichzeitig erzeugt.

Die in Fig. 9 gezeigten Öffnungen 60 links und 61 rechts sind nicht unbedingt erforderlich, sie können jedoch dazu dienen, den Halterahmen 37 in der Halterung 12 des Hohlspiegels 1 zu arretieren.

Die Fig. 10 und 11 zeigen ferner, daß der obere Teil 40 und der untere Teil 41 des Halterahmens 37 mit bogenförmigen Ansätzen 67 und 68 versehen sind, die das Einsetzen in die Halterung 12 durch die Öffnung 64 im Hohlspiegel 1 erleichtern und die Zentrierung sicherstellen sollen.

Anhand der Figuren 12 bis 15 wird das Verfahren zum Herstellen einer Sensorelementeanordnung nach der Erfindung erläutert.

Fig. 12 zeigt einen Teil eines leiterartigen Gebildes 56, das im vorliegenden Fall aus den oberen Teilen 40 des Halterahmens und Drähten 57 und 58 gebildet wird. Die Drähte 57 und 58 laufen vorzugsweise von Vorratsrollen ab und werden mit den Teilen des Halterahmens versehen, beispielsweise dadurch, daß diese Teile direkt an den Drähten gebildet werden, indem die beiden Drähte 57 und 58 durch eine entsprechende Preßvorrichtung geführt werden. Es ist aber auch möglich und zu bevorzugen, die Halterahmenteile 40 und 41 je für sich herzustellen und erst dann mit den Drähten 57 und 58 zu verbinden.

Zwischen je zwei Halterahmenteilen wird ein Abstand 63 vorgesehen, der etwa der Länge der späteren Steckerstifte 42 und 43 entspricht.

Man kann entweder zwei leiterartige Gebilde einerseits mit den oberen Teilen 40 und andererseits mit den unteren Teilen 41 bilden und diese beiden leiterartigen Gebilde dann zusammenführen, es ist aber auch möglich, nur ein leiterartiges Gebilde 56 aus Halterahmenteilen 40 und 41 und Drähten herzustellen, da die beiden Teile in Draufsicht und im Querschnitt vollkommen identisch sind.

Nach dem Abtrennen je eines Halterahmenteiles vom leiterartigen Gebilde 56 wird dieses mit dem nächsten abzutrennenden Teil nach dem Zwischenlegen der Sensorfolie 13 verbunden, wofür einer der beiden Halterahmenteile umzudrehen ist. Dadurch passen Zapfen 48 bzw. 49 und Löcher 50 bzw. 51 genau zueinander.

Zur Vereinfachung der Darstellung des Verfahrens wird von der Herstellung zweier leiterartiger Gebilde ausgegangen, wobei Fig. 12 das leiterartiger Gebilde 56 mit den oberen Teilen 40 und Fig. 14 das leiterartige Gebilde mit den unteren Teilen 41 des Halterahmens darstellen. In den Figuren 12, 13 und 14 sind sowohl die Zapfen 48 und 49 als auch die zugeordneten Löcher 50 und 51 sowie die Fenster 59 und 60 dargestellt.

Fig. 15 zeigt einen Schnitt längs der Linie XV - XV in Fig. 14 und läßt wiederum die Rinnen 46 und 47 im unteren Teil 41, den Zapfen 49 und das Loch 51 sowie die in den Rinnen 46 und 47 befindlichen Drähte 58 und 57 erkennen. Diese Drähte 57 und 58 ragen um einen geringen Betrag aus den Rinnen 46 und 47 heraus für den oben bereits beschriebenen Zweck.

Synchron oder zu einem anderen Zeitpunkt der Herstellung der leiterartigen Gebilde aus den Rahmenteilen werden die Sensorelementefolien hergestellt, indem eine Folie, vorzugsweise aus Polyvinylidendifluorid (PVDF), beidseitig mit Metall versehen, insbesondere bedampft wird, wobei in Längsrichtung des Bandes an beiden Seiten metallfreie Randstreifen 52, 53, 54, 55 freigelassen werden und dabei oder danach die quasi-mäanderförmig verlaufenden metallfreien Streifen 20 auf der oberen Seite 14 und die quasi-mäanderförmig verlaufenden metallfreien Streifen 21 auf der unteren Seite 15 des Bandes sich stets wiederholend so hergestellt werden, daß die angestrebte Konfiguration der Elektroden 16, 17, 18, 19 für die Bildung der Sensorelemente 2, 3, 4 entsteht.

Vor oder nach dem Abtrennen der einzelnen Rahmenteile von dem leiterartigen Gebilde 56 werden von dem Band einzelne Folie 13 abgetrennt und zwischen jeweils zwei Rahmenteilen eingefügt, und zwar quer zur Laufrichtung des leiterartigen Gebildes. Durch Betätigen der Druckknopfverbindung werden die beiden Teile 40 und 41 des Halbleiterrahmens 37 miteinander fest verbunden.

Bezugszeichenliste

| | |
|---|---|
| 1 | Hohlspiegel |
| 2 | erstes Sensorelement |
| 3 | weiteres Sensorelement |
| 4 | weiteres Sensorelement |
| 5 | strahlungsdurchlässige Abdeckung |
| 6 | optische Achse |
| 7 | Wabengitter |
| 8 | Widerhaken am Hohlspiegel |
| 9 | Widerhaken am Wabengitter |
| 10 | Gehäuse |
| 11 | elektronische Auswerteeinrichtung |
| 12 | Halterung für die Sensorelemente |
| 13 | Folie (Sensorelementefolie) |
| 14 | obere Seite der Folie 13 |
| 15 | untere Seite der Folie 13 |
| 16 | positive Elektrode auf der Seite 14 |
| 17 | negative Elektrode auf der Seite 14 |
| 18 | positive Elektrode auf der Seite 15 |
| 19 | negative Elektrode auf der Seite 15 |
| 20 | quasi-meanderförmiger metallfreier Streifen auf der Seite 14 |
| 21 | quasi-meanderförmiger metallfreier Streifen auf der Seite 15 |
| 22 | Haken als Elektrode 16 |
| 23 | Haken als Elektrode 17 |
| 24 | Haken als Elektrode 18 |
| 25 | Haken als Elektrode 19 |
| 26 | Mitte der Folie |
| 27 | Endfläche des Hakens 22 der Elektrode 16 |
| 28 | Endfläche des Hakens 23 der Elektrode 17 |
| 29 | Endfläche des Hakens 24 der Elektrode 18 |
| 30 | Endfläche des Hakens 25 der Elektrode 19 |
| 31 | Elektrodenfläche gegenüber Endfläche 28 |
| 32 | Elektrodenfläche gegenüber Endfläche 29 |
| 33 | obere Leitung für die Verbindung der positiven Elektrode |
| 34 | obere Leitung für die Verbindung der negativen Elektrode |
| 35 | untere Leitung für die Verbindung der positiven Elektrode |
| 36 | untere Leitung für die Verbindung der negativen Elektrode |
| 37 | Halterahmen |
| 38 | gekrümmter Teil des Streifens 20 |
| 39 | gekrümmter Teil des Streifens 21 |
| 40 | oberer Teil des Halterahmens 37 |
| 41 | unterer Teil des Halterahmens 37 |
| 42 | Steckerstift |
| 43 | Steckerstift |
| 44 | Rinne für die Leitung 33 |
| 45 | Rinne für die Leitung 34 |
| 46 | Rinne für die Leitung 35 |
| 47 | Rinne für die Leitung 36 |
| 48 | Zapfen am oberen Teil 40 |
| 49 | Zapfen am unteren Teil 41 |
| 50 | Löcher am oberen Teil 40 |
| 51 | Löcher am unteren Teil 41 |
| 52 | metallfreier Randstreifen |
| 53 | metallfreier Randstreifen |
| 54 | metallfreier Randstreifen |
| 55 | metallfreier Randstreifen |
| 56 | leiterartiges Gebilde |
| 57 | Draht |
| 58 | Draht |
| 59 | Fenster im oberen Teil 40 |
| 60 | im unteren Teil 41 |
| 61 | linke Öffnung |
| 62 | rechte Öffnung |
| 63 | Abstand zwischen zwei Rahmenteilen |
| 64 | Öffnung im Hohlspiegel 1 |
| 65 | metallfreie Fläche am Ende des metallfreien Streifens 20 |
| 66 | metallfreie Fläche am Ende des metallfreien Streifens 21 |
| 67 | bogenförmiger Ansatz am Teil 40 |
| 68 | bogenförmiger Ansatz am Teil 41 |

**Patentansprüche**

1. Pyrodetektor zur Detektion eines in seinen Detektionsbereich eintretenden, eine von seiner Umgebungstemperatur abweichende Temperatur aufweisenden Körpers, mit einer Sensorelementeanordnung in einem Halterahmen, und einem Hohlspiegel (1) zur Fokusierung der von diesem Körper ausgehenden Wärmestrahlung, wobei ein erstes Sensorelement (2) im Fokus des Hohlspiegels (1) angebracht ist und zwei weitere Sensorelement (3, 4) zur Kompensation von Umgebungseinflüssen vorgesehen sind, wobei

   - eine Folie (13) aus ein und demselben elektrisch nichtleitenden Material mit permanenter gleichgerichteter Orientierungspolarisation vorgesehen ist, auf deren beide Seiten Elektroden aus dünnen Metallschichten einander so gegenüberstehen, daß die Sensorelemente (2, 3, 4) gebildet werden,

- die Elektroden über elektrische Leitungen mit einer elektronischen Auswerteeinrichtung (10) verbunden sind,
- die Sensorelementeanordnung in einer im Hohlspiegel (1) vorhandenen Halterung (12) befestigt ist und die Folie (13) mit den Sensorelementen (2, 3, 4) in dem Hohlspiegel (1) so angeordnet ist, daß ein Strahlungseinfall der im Hohlspiegel (1) reflektierten Strahlung auf beiden Oberflächenseiten der Folie (13) vorliegt,
- der Hohlspiegel (1) ein parabolischer Spiegel ist, der so bemessen ist, daß sein Fokus in der inneren Hälfte des Hohlspiegels (1) liegt,
- die Folie (13) mit den Sensorelementen (2, 3, 4) in der optischen Achse (6) des Hohlspiegels (1) liegt, so daß das erste Sensorelement (2) im wesentlichen nur von einer solchen Strahlung des in größerer Entfernung befindlichen zu detektierenden Körpers getroffen wird, die im Hohlspiegel (1) reflektiert worden ist,

**gekennzeichnet durch** die Merkmale:

- auf jeder Seite (14, 15) der Folie (13) sind Elektroden (16, 17, 18, 19) beider Polaritäten (Plus und Minus) vorhanden,
- die Elektroden (16, 17, 18, 19) sind auf jeder Seite (14, 15) durch einen quasi-mäanderförmig verlaufenden metallfreien Isolierstreifen (20, 21) voneinander getrennt,
- die Konfiguration der Elektroden (16, 17, 18, 19) ist derart ausgebildet, daß sie in Form von Haken (22, 23, 24, 25) ineinandergreifen,
- zur Bildung der drei Sensorelemente (2, 3, 4) stehen die Elektroden (16, 17) auf der einen Seite (14) den Elektroden (18, 19) auf der anderen Seite (15) der Folie (13) so gegenüber, daß die in der Mitte (26) der Folie (13) vorhandenen Endflächen (27, 30) der Haken (22, 25) der Elektroden (16, 19) die gegenpoligen Belegungen des für die Lage im Fokus bestimmten Sensorelementes (2) bilden, während die von der Mitte (26) der Folie (13) abweichenden Endflächen (28, 29) der Haken (23, 24) der Elektroden (18, 19) zusammen mit jeweils gegenüberliegenden Elektrodenflächen (31, 32) die gegenpoligen Belegungen der beiden zur Kompensation dienenden Sensorelemente (3, 4) bilden, die zur Differenzbildung zum im Fokus angeordneten Sensorelement (2) gegengeschaltet sind,

- an den Randbereichen der Folie (13) sind die jeweils gegenüberliegenden gleichpoligen Elektroden (16 und 18, bzw. 17 und 19) der beiden Seiten (14, 15) miteinander durch Leitungen (33, 34, 35, 36) außerhalb der Folie (13) verbunden,
- die Sensorelementeanordnung samt Folie (13) und Leitungen (33, 34, 35, 36) ist von dem Halterahmen (37) umgeben, der zentriert und justiert in die Halterung (12) einsetzbar ist.

2. Pyrodetektor nach Anspruch 1, **dadurch gekennzeichnet,** daß die Elektroden (16, 17, 18, 19) aus aufgedampften Schichten aus Aluminium, Zink, Zinn, Kupfer, Silber oder Gold oder einem der Platinmetalle bestehen.

3. Pyrodetektor nach Anspruch 2, **dadurch gekennzeichnet,** daß bei Elektroden (16,17,18,19) aus Kupfer- oder Silberschichten deren Oberfläche in das jeweilige Sulfid (CuS bzw. $Ag_2S$) umgewandelt sind.

4. Pyrodetektor nach Anspruch 1,2 oder 3, **dadurch gekennzeichnet,** daß die Fläche des für die Lage im Fokus des Hohlspiegels (1) vorgesehenen mittleren Sensorelementes (2) der Fokusfläche angepaßt ist.

5. Pyrodetektor nach Anspruch 4, **dadurch gekennzeichnet,** daß für einen in zwei Ebenen (I - I und II - II) gewölbten Hohlspiegel (1), dessen Krümmung zu einer Ebene (I - I) vorzugsweise stärker sein kann als zu der anderen Ebene (II - II), die Fläche des mittleren Sensorelementes (2) zu den Randbereichen der Folie (13) hin durch gerade verlaufende Teile und quer dazu durch im gleichen Sinne gekrümmt verlaufende Teile (38, 39) der quasi-mäanderförmig verlaufenden metallfreien Streifen (20, 21) begrenzt sind.

6. Pyrodetektor mit einer Sensorelementeanordnung in einem Halterahmen, der die Folie (13) der Sensorelemente (2, 3, 4) trägt und mit elektrischen Leitungen als Stromzuführungen zu den Sensorelementen (2, 3, 4) und mit Steckerstiften für die Verbindung mit der elektronischen Auswerteeinrichtung (11) versehen ist, nach einem der Ansprüche 1 bis 5, **dadurch gekennzeichnet,** daß der Halterahmen (37) aus einem oberen Teil (40) und einem unteren Teil (41) aus gepreßtem Isolierstoff besteht, die miteinander verbunden sind und zwischen denen sowohl die Folie (13) als auch die Leitungen (33, 34, 35, 36) befestigt sind, die in die Steckerstifte (42, 43) übergehen.

7. Pyrodetektor nach Anspruch 6, **dadurch gekennzeichnet,** daß die beiden Teile (40, 41) des Halterahmens (37) die Leitungen (33, 34, 35, 36) in Rinnen (44, 45, bzw. 46, 47) enthalten, wobei jeweils die Rinnen (44, 45) des oberen Teiles (40) gegenüber den Rinnen (46, 47) des unteren Teiles (41) gegeneinander um einen geringen Betrag versetzt sind und dadurch den Halt der Folie (13) und klemmende Kontakte zwischen den Leitungen (33 und 35, bzw. 34 und 36) und den Metallschichten der Elektroden (16 und 18 bzw. 17 und 19) bewirken.

8. Pyrodetektor nach Anspruch 6 oder 7, **dadurch gekennzeichnet,** daß der obere Teile (40) und der untere Teil (41) des Halterahmens (37) an jeweils gleichen Stellen mit Zapfen (48, 49) und entsprechend dazu jeweils an gleichen Stellen mit Löchern (50, 51) für die Verbindung der beiden Teile (40, 41) nach dem Druckknopfprinzip versehen sind.

9. Verfahren zum Herstellen einer Sensorelementeanordnung mit Halterahmen nach einem der Ansprüche 1 bis 8, bei dem zunächst auf einer Kunststoffolie, insbesondere aus Polyvinylidendifluorid (PVDF), durch entsprechende Metallisierung die Sensorelemente erzeugt, diese Anordnung mit Stromzuführungen versehen und danach in einem Halterahmen untergebracht wird, **gekennzeichnet** durch die Verfahrensschritte:

a) Herstellen eines beiderseitig metallisierten Bandes, inden eine Kunststoffolie, insbesondere aus Polyvinylidendifluorid (PVDF), beiderseitig mit Metall versehen, insbesondere bedampft wird, - wobei in Längsrichtung des Bandes an beiden Seiten metallfreie Randstreifen freigelassen werden und dabei oder danach quasi-mäanderförmig verlaufende metallfreie Streifen (20) auf der oberen Seite (14) und quasi-mäanderförmig verlaufende Streifen (21) auf der unteren Seite (15) des Bandes sich stets wiederholend so hergestellt werden, daß die angestrebte Konfiguration der Elektroden (16, 17, 18, 19) für die Sensorelemente (2, 3, 4) entsteht,

b) Herstellen der Halterahmen (37), indem zunächst synchron oder in anderem Zeitablauf zum Verfahrensschritt a) wenigstens ein leiterartiges Gebilde (56) aus zwei von Voratsrollen ablaufenden Drähten und an diesen Drähten oder getrennt erzeugten, die Rinnen (44, 45, 46, 47) die Zapfen (48, 49) und die Löcher (50, 51) aufweisenden Halterahmenteilen (40, 41) dadurch gebildet wird, daß die Drähte als spätere Leitungen (33, 34, 35, 36) in den Rinnen (44, 45, 46, 47) befestigt werden, wobei zwischen den in Draufsicht und im Querschnitt identischen Halterahmenteilen (40, 41) jeweils ein der Länge der später benötigten Steckerstifte (42, 43) entsprechender Abstand (63) eingehalten wird,

c) Abtrennen der Halterahmenteile (40, 41) von dem oder den leiterartigen Gebilden (56) vor oder nach dem Zwischenfügen eines entsprechenden, die Folie (13) mit den Elektroden (16, 17, 18, 19) und den Sensorelementen (2, 3, 4 ) darstellenden Teiles des Bandes des Verfahrensschrittes a) quer zur Laufrichtung des leiterartigen Gebildes (56) und betätigen der Druckknopfverbindung.

10. Verfahren nach Anspruch 9, **dadurch gekennzeichnet,** daß das Band gemäß Verfahrensschritt a) im Siebdruckverfahren metallisiert wird und dabei die quasi-mäanderförmigen Streifen (20, 21) erzeugt werden.

11. Verfahren nach Anspruch 9, **dadurch gekennzeichnet,** daß das Band gemäß Verfahrensschritt a) durch Bedampfung oder durch Kathodenzerstäubung eines der Metalle Aluminium, Zink, Zinn Kupfer, Silber oder Gold oder einen der Platinmetalle metallisiert wird und die quasi-mäanderförmigen Streifen (20, 21) durch Elektroerosion, chemisches Ätzen, Laserenergie oder auf mechanische Weise durch Abschleifen erzeugt werden.

12. Verfahren nach einem der Ansprüche 9, 10 oder 11, **dadurch gekennzeichnet,** daß nach dem Verfahrensschritt a) ein weiterer Verfahrensschritt eingefügt wird, bei dem die mit den Elektroden (16,17,18,19) aus Kupfer oder Silber versehene Folie durch ein Gefäß geführt wird, in welchem sich Schwefelwasserstoff ($H_2S$) befindet und dadurch die Oberfläche der Kupfer- oder Silberschichten in das jeweilige Sulfid ($CuS$ bzw. $Ag_2S$) umgewandelt wird.

## Claims

1. Pyroelectric detector for detecting a body entering its detection area and having a temperature deviating from its environmental temperature, comprising a sensor element arrangement in a holding frame and a concave mirror (1) for focusing the heat radiation emanating from this body, a first sensor element (2) being mounted in the focus of the concave mirror (1) and two further sensor elements (3, 4) being provided for compensating environmental influences, in which arrangement

- a film (13) of one and the same electrically nonconductive material is provided with permanent rectified orientation polarisation, on the two sides of which electrodes of thin metal layers are opposite to one another in such a manner that the sensor elements (2, 3, 4) are formed,
- the electrodes are connected via electrical lines to an electronic evaluating device (10),
- the sensor element arrangement is attached in a holder (12) provided in the concave mirror (1) and the film (13) with the sensor elements (2, 3, 4) is arranged in the concave mirror (1) in such a manner that incident radiation of the radiation reflected in the concave mirror (1) is present on both surface sides of the film (13),
- the concave mirror (1) is a parabolic mirror which is dimensioned in such a manner that its focus is located in the inner half of the concave mirror (1),
- the film (13) with the sensor elements (2, 3, 4) is located in the optical axis (6) of the concave mirror (1) so that the first sensor element (2) is essentially only hit by radiation reflected in the concave mirror (1) from the body to be detected, which is located at a relatively great distance,

characterised by the following features:

- on each side (14, 15) of the film (13), electrodes (16, 17, 18, 19) of both polarities (positive and negative) are present,
- the electrodes (16, 17, 18, 19) are separated from one another on each side (14, 15) by a metal-free insulating strip (20, 21) which extends in a quasimeander shape,
- the configuration of the electrodes (16, 17, 18, 19) is formed in such a manner that they intermesh in the form of hooks (22, 23, 24, 25),
- to form the three sensor elements (2, 3, 4), the electrodes (16, 17) on one side (14) are opposite to the electrodes (18, 19) on the other side (15) of the film (13) in such a manner that the end faces (27, 30), existing in the centre (26) of the film (13), of the hooks (22, 25) of the electrodes (16, 19) form the counterpole allocations of the sensor element (2) intended for the position in the focus whilst the end faces (28, 29), which deviate from the centre (26) of the film (13), of the hooks (23, 24) of the electrodes (18, 19), together with in each case opposite electrode faces (31, 32), form the counterpole allocations of the two sensor elements (3, 4) used for compensation, which are connected in opposition to the sensor element (2) arranged in the focus for forming difference,

- in the edge areas of the film (13), the electrodes of the same polarity, which in each case are opposite one another (16 and 18, and 17 and 19, respectively), of the two sides (14, 15) are connected to one another by lines (33, 34, 35, 36) outside the film (13),
- the sensor element arrangement and film (13) and lines (33, 34, 35, 36) are surrounded by the holding frame (37) which can be inserted centred and aligned into the holder (12).

2. Pyroelectric detector according to claim 1, characterised in that the electrodes (16, 17, 18, 19) consist of vapour-deposited layers of aluminium, zinc, tin, copper, silver or gold or one of the platinum metals.

3. Pyroelectric detector according to Claim 2, characterised in that in the case of electrodes (16, 17, 18, 19) of copper or silver layers, their surface is converted into the respective sulphide (CuS or Ag$_2$S, respectively).

4. Pyroelectric detector according to Claim 1, 2 or 3, characterised in that the area of the centre sensor element (2) provided for the position in the focus of the concave mirror (1) is adapted to the focus area.

5. Pyroelectric detector according to Claim 4, characterised in that for a concave mirror (1) curved in two planes (I - I and II - II), the curvature of which can be preferably greater with respect to one plane (I - I) than with respect to the other plane (II - II), the area of the centre sensor element (2) is limited towards the edge areas of the film (13) via parts extending in a straight line and transversely thereto by parts (38, 39) extending curved in the same direction, of the metal-free strips (20, 21) extending in a quasi-meander shape.

6. Pyroelectric detector comprising a sensor element arrangement in a holding frame which carries the film (13) of the sensor elements (2, 3, 4) and is provided with electric lines as current feeds to the sensor elements (2, 3, 4) and with connector pins for the connection with the electronic evaluating device (11), according to one of Claims 1 to 5, characterised in that the holding frame (37) consists of an upper part (40) and of a lower part (41) of pressed insulating material, which are connected to one another and between which both the film (13) and the lines (33, 34, 35, 36) are mounted which pass into the connector pins (42, 43).

7. Pyroelectric detector according to Claim 6, characterised in that the two parts (40, 41) of the holding frame (37) contain the lines (33, 34, 35, 36) in grooves (44, 45 and 46, 47), the grooves (44, 45) of the upper part (40) being offset by a slight amount with respect to one another compared to the grooves (46, 47) of the lower part (41) in each case and as a result effect the holding of the film (13) and clamping contacts between the lines (33 and 35, and 34 and 36) and the metal layers of the electrodes (16 and 18 and 17 and 19).

8. Pyroelectric detector according to Claim 6 or 7, characterised in that the upper part (40) and the lower part (41) of the holding frame (37) are provided at the same locations in each case with pins (48, 49) and correspondingly thereto in each case at the same locations with holes (50, 51) for connecting the two parts (40, 41) in accordance with the press-button principle.

9. Method for producing a sensor element arrangement with holding frame according to one of Claims 1 to 8, in which initially the sensor elements are created by corresponding metallisation on a plastic film, particularly of polyvinylidene difluoride (PVDF), this arrangement is provided with current feeds and thereafter accommodated in a holding frame, characterised by the method steps:

a) production of a ribbon metallised on both sides, in that metal is provided, preferably vapour-deposited, on both sides of a plastic film, preferably of polyvinylidene difluoride (PVDF), metal-free edge strips being left exposed in the longitudinal direction of the ribbon on both sides and during this process or thereafter metal-free strips (20) extending in a quasi-meander shape on the top side (14) and strips (21) extending in a quasi-meander shape on the lower side (15) of the ribbon are continuously repetitively produced in such a manner that the desired configuration of the electrodes (16, 17, 18, 19) for the sensor elements (2, 3, 4) is produced,

b) production of the holding frames (37), in that initially synchronisely or in a different time sequence from the method step a), at least one ladder-like structure (56) of two wires leading off storage drums and holding frame parts (40, 41) created on these wires or separately and exhibiting the grooves (44, 45, 46, 47), the pins (48, 49) and the holes (50, 51) are formed by the wires being attached as later lines (33, 34, 35, 36) in the grooves (44, 45, 46, 47), a distance (63) corresponding to the length of the connector pins (42, 43) needed later being maintained between the holding frame parts (40, 41) which are identical in top view and in cross-section,

c) separating the holding frame parts (40, 41) from the ladder-like structure or structures (56) before or after the interposition of a corresponding part, representing the film (13) with the electrodes (16, 17, 18, 19) and the sensor elements (2, 3, 4), of the ribbon of method step a) transversely to the direction of running of the ladder-like structure (56) and actuating of the press-button connection.

10. Method according to Claim 9, characterised in that the ribbon according to method step a) is metallised in the screen printing method and during this process the quasi-meander-shaped strips (20, 21) are created.

11. Method according to Claim 9, characterized in that the ribbon according to method step a) is metallised by means of vaporisation or by cathode sputtering of one of the metals aluminium, zinc, tin, copper, silver or gold or one of the platinum metals, and the quasimeander-shaped strips (20, 21) are created by electroerosion, chemical etching, laser power or mechanically by grinding.

12. Method according to one of Claims 9, 10 or 11, characterized in that after method step a), a further method step is inserted in which the film provided with the electrodes (16, 17, 18, 19) of copper or silver is conducted through a vessel in which hydrogen sulphide ($H_2S$) is located and as a result the surface of the copper or silver layers is converted into the respective sulphide ($CuS$ or $Ag_2S$, respectively).

## Revendications

1. Pyrodétecteur servant à détecter un corps qui pénètre dans sa zone de détection et possède une température différente de sa température ambiante, et comportant un ensemble d'éléments formant capteurs placés dans un cadre de support, et un miroir concave (1) servant à focaliser le rayonnement thermique délivré par ce corps, et dans lequel un premier élément formant capteur (2) est disposé au foyer du miroir concave (1) et deux autres éléments formant capteurs (3,4) sont prévus pour compenser des influences de l'environnement, et dans lequel

   - il est prévu une feuille (13) réalisée en un matériau électriquement non conducteur et possédant une polarisation d'orientation redressée permanente et sur les deux faces de laquelle sont disposées des électrodes formées de minces couches métalliques, dans des positions à l'opposé l'une de l'autre, en formant ainsi les éléments formant capteurs (2,3,4),
   - les électrodes sont raccordées au moyen de conducteurs électriques à un dispositif électronique d'évaluation (10),
   - l'ensemble des éléments formant capteurs est fixé dans un support (12) présent dans le miroir concave (1), et la feuille (13) munie des éléments formant capteurs (2,3,4) est disposée dans le miroir concave (1) de sorte que le rayonnement réfléchi dans le miroir concave (1) rencontre les deux faces supérieures de la feuille (13),
   - le miroir concave (1) est un miroir parabolique dimensionné de telle sorte que son foyer est situé dans la moitié intérieure du miroir concave (1),
   - la feuille (13) munie des éléments formant capteurs (2,3,4) est située sur l'axe optique (6) du miroir concave (1) de sorte que le premier élément formant capteur (2) est atteint essentiellement uniquement par un rayonnement, qui a été réfléchi dans le miroir concave (1), du corps à détecter, qui est situé à une assez grande distance,

   caractérisé par les caractéristiques suivantes :
   - sur chaque face (14,15) de la feuille (13) sont présentes des électrodes (16,17,18) possédant les deux polarités (plus et moins),
   - les électrodes (16,17,18,19) sont séparées les unes des autres, sur chaque face (14,15), par une bande isolante (20,21) ne comportant aucun métal et s'étendant sous la forme quasiment sinueuse,
   - la configuration des électrodes (16,17,18,19) est telle qu'elles s'interpénètrent sous la forme de crochets (22,23,24,25),
   - pour la formation des trois éléments formant capteurs (2,3,4), les électrodes (16,17) situées sur une face (14) sont situées à l'opposé des électrodes (18,19) situées sur l'autre face (15) de la feuille (13) de telle sorte que les surfaces d'extrémité (27,30), qui sont présentes au centre (26) de la feuille (13), des crochets (22,25) des électrodes (16,19) forment les armatures, ayant des polarités opposées, de l'élément formant capteur (2) prévu pour être positionné au foyer, tandis que les surfaces d'extrémité (28,29), qui s'écartent du centre (26) de la feuille (13), des crochets (23,24) des électrodes (18,19) forment, conjointement avec les surfaces d'électrodes (31,32) respectivement opposées, les armatures, ayant des polarités opposées, des deux éléments formant capteurs (3,4) utilisés pour la compensation et qui, pour la formation de la différence, sont branchés en opposition avec l'élément formant capteur (2) disposé au foyer,
   - sur les zones marginales de la feuille (13), les électrodes de même polarité (16 et 18 ou 17 et 19), qui sont respectivement opposées les unes aux autres, des deux faces (14,15) sont reliées entre elles par des conducteurs (33,34,35,36) à l'extérieur de la feuille (13),
   - l'ensemble des éléments formant capteurs ainsi que la feuille (13) et les conducteurs (33,34,35,36) sont entourés par le cadre de support (34), qui peut être inséré d'une manière centrée et ajustée dans le support (12).

2. Pyrodétecteur suivant la revendication 1, caractérisé par le fait que les électrodes (16,17,18,19) sont formées par des couches déposées par évaporation, d'aluminium, de zinc, d'étain, de cuivre, d'argent ou d'or ou d'un de l'un des métaux du groupe du platine.

3. Pyrodétecteur suivant la revendication 2, caractérisé par le fait que dans le cas où les électrodes (16,17,18,19) sont formées de couches de cuivre ou d'argent, leurs surfaces sont transformées en le sulfure respectif (CuS ou $Ag_2S$).

4. Pyrodétecteur suivant la revendication 1, 2 ou 3, caractérisé par le fait que la surface de l'élément médian formant capteur (2), prévu dans la position du foyer du miroir concave (1), est adaptée à la surface focale.

5. Pyrodétecteur suivant la revendication 4, caractérisé par le fait que pour un miroir concave (1) cintré dans deux plans (I-I et II-II) et dont la courbure par rapport à un plan (I-I) peut être de préférence supérieure à sa courbure par rapport à l'autre plan (II-II), la surface de l'élément médian formant capteur (2) par rapport aux zones marginales de la feuille (13) est limitée par des parties rectilignes et que la surface de l'élément médian formant capteur (2) transversalement par rapport à ces zones marginales est limitée par des parties (38,39), cintrées dans le même sens, des bandes (20,21) exemptes de métal et possédant une configuration quasiment sinueuse.

6. Pyrodétecteur comportant un ensemble d'éléments formant capteurs dans un cadre de support, qui porte la feuille (13) des éléments formant capteurs (2,3,4) et est pourvu de conducteurs électriques formant éléments d'alimentation en courant aboutissant aux éléments formant capteurs (2,3,4) et des fiches mâles de connexion pour la liaison avec le dispositif électronique d'évaluation (11), suivant l'une des revendications 1 à 5, caractérisé par le fait que le cadre de support (37) est constitué par une partie supérieure (40) et une partie inférieure (41), qui sont réalisées en une matière isolante pressée, et sont raccordées entre elles et entre lesquelles sont fixés aussi bien la feuille (13) que les conducteurs (33,34,35,36), qui se prolongent par les fiches mâles (42,43).

7. Pyrodétecteur suivant la revendication 6, caractérisé par le fait que les deux parties (40,41) du cadre de support (37) contiennent les conducteurs (33,34,35,36) dans des gorges (44,45 ou 46,47), les gorges (44,45) de la partie supérieure (40) étant décalées respectivement d'une faible valeur par rapport aux gorges (46,47) de la partie inférieure (41) et réalisant de ce fait le maintien de la feuille (13) et des contacts, qui appliquent un serrage, entre les conducteurs (33 et 35 ou 34 et 36) et les couches métalliques des électrodes (16 et 18 ou 17 et 19).

8. Pyrodétecteur suivant la revendication 6 ou 7, caractérisé par le fait que la partie supérieure (40) et la partie inférieure (41) du cadre de support (37) comportent, en des emplacements respectivement identiques, des tétons (48,49) et, d'une manière correspondant à cette disposition, respectivement en des emplacements identiques, des trous (50,51) pour la liaison des deux parties (40,41) selon le principe du bouton-pression.

9. Procédé pour fabriquer un ensemble d'éléments formant capteur comportant un cadre de support suivant l'une des revendications 1 à 8, et selon lequel on forme tout d'abord les éléments formant capteurs sur une feuille de matière plastique, notamment en difluorure de polyvinylidène (PVDF), moyennant une métallisation correspondante, qu'on équipe cet ensemble, d'éléments d'alimentation en courant et qu'on le dispose ensuite dans un cadre de support, caractérisé par les étapes opératoires suivantes:

a) fabrication d'une bande métallisée sur ses deux faces, moyennant le dépôt, notamment par évaporation, d'un métal sur les deux faces d'une feuille de matière plastique, formée notamment de difluorure de polyvinylidène (PVDF), tout en laissant subsister, dans la direction longitudinale de la bande, des bandes marginales non recouvertes de métal sur les deux faces de la bande, et en fabriquant alors ou ensuite, d'une manière répétée de façon permanente, des bandes (20) exemptes de métal, quasiment de forme sinueuse, sur la face supérieure (14) et des bandes (21) possédant une forme quasiment sinueuse sur la face inférieure (15) de la bande, pour faire apparaître la configuration recherchée des électrodes (16,17,18,19) pour les éléments formant capteurs (2,3,4),

b) fabrication du cadre de support (37) par formation, tout d'abord, en synchronisme avec l'étape opératoire a) ou au cours d'un autre cycle temporel, d'au moins une structure en forme de conducteur (56), formée de deux fils déroulés de rouleaux débiteurs et de parties (40,41) du cadre de support produites à côté de ces fils ou séparément et comportant les gorges (44,45,46,47), les tétons (48,49) et les trous (50,51), de sorte que les fils sont fixés, en tant que conducteurs ultérieurs (33,34,35,36) dans les gorges (44,45,46,47), en respectant respectivement une distance (63) correspondant à la longueur des fiches mâles ultérieurement nécessaires (42,43), entre les parties (40,42) du cadre de support identiques selon une vue en plan et en coupe transversale,

c) séparation des parties (40,41) du cadre, de la ou des structures en forme de conducteurs (56) avant ou après l'insertion d'une partie correspondante de la bande de l'étape opératoire a), qui représente la feuille (13) équipée des électrodes (16,17,18,19) et des éléments formant capteurs (2,3,4), transversalement par rapport à la direction dans laquelle s'étend la structure en forme de conducteur (56), et actionnement de la liaison type bouton-pression.

10. Procédé suivant la revendication 9, caractérisé par le fait qu'on métallise la bande obtenue lors de l'étape opératoire a) en utilisant le procédé de sérigraphie et qu'on produit alors les bandes (20,21) possédant une forme quasiment sinueuse.

11. Procédé suivant la revendication 9, caractérisé par le fait qu'on métallise la bande conformément à l'étape opératoire a) par dépôt par évaporation ou pulvérisation cathodique de l'un des métaux aluminium, zinc, étain, cuivre, argent ou or, ou de l'un des métaux du groupe du platine, et qu'on produit les bandes (20,21) possédant une forme quasiment sinueuse, au moyen d'une électro-érosion, d'une corrosion chimique, de l'application d'une énergie laser ou d'une manière mécanique par meulage.

12. Procédé suivant l'une des revendications 9, 10 ou 11, caractérisé par le fait qu'après l'étape opératoire a), on introduit une autre étape opératoire, lors de laquelle on introduit la feuille pourvue des électrodes (16,17,18,19) en cuivre ou en argent, dans un récipient, dans lequel est situé de l'acide sulfurique ($H_2S$) et que, de ce fait, la surface des couches de cuivre ou d'argent est convertie en le sulfure respectif ($CuS$ ou $Ag_2S$).

# FIG 1

# FIG 3

# FIG 2

# FIG 4

FIG5  FIG6  FIG 7

FIG 8

FIG 9

FIG 10

FIG 11

FIG 12

FIG 13

FIG 14

FIG 15